# EUROPEAN PATENT SPECIFICATION

(11) **EP 0 774 071 B1**
(45) Date of publication and mention of the grant of the patent: **06.10.1999**
(21) Application number: 94906135.2
(22) Date of filing: 28.01.1994
(51) Int. Cl.: F03D 1/06

(54) **WINDMILL BLADE**
WINDRADFLÜGEL
AILE DE MOULIN A VENT

(30) Priority: 29.01.1993 DK 135092
(43) Date of publication of application: 21.05.1997
(73) Proprietor: BONUS ENERGY A/S, 7330 Brande (DK)
(72) Inventor: VINTHER, S ren, DK-7400 Herning (DK)
(74) Representative: Nielsen, Leif
(86) International application number: DK9400048
(87) International publication number: WO9417303

(56) References cited:
- US-A- 2 689 107
- US-A- 2 732 020
- US-A- 2 984 453
- US-A- 3 357 850
- US-A- 4 692 100
- US-A- 4 806 077

## Description

### Background of the invention

The invention relates to a windmill blade made of glass-fibre-laminated synthetic material for the formation of an outer shell, and with possible internal, longitudinal ribs connected by cross braces, said ribs and braces extending inside the cavity in the blade shell.

The increasing use of windmills, and therewith their positioning especially in dependence on residential property and the landscape, places great demands on their positioning, appearance and noise characteristics.

With regard to the transmission of noise, this can consist of the noise which is generated and emitted by the mechanical parts of the windmill, such as the transmission. This mechanical noise can be reduced by processing the mechanical parts with the greatest possible precision, and moreover by shielding and therewith encapsulating the noise-producing machine elements in the best manner possible.

In this way, the level of noise from the mechanical parts of the machinery is reduced to such a degree that this is no longer considered as being an inconvenience for the neighbourhood.

In addition to the mechanical noise, the windmill transmits aerodynamic noise. This stems from mechanical vibrations in the mill machinery, which are conveyed to the wings from where the vibrations are emitted to the surroundings.

Since the blades on large windmills have a relatively large surface area, the correspondingly high level of noise which stems from the blades is of considerable inconvenience for the neighbourhood.

The noise emitted from a windmill blade arises particularly as a result of resonance in the blade. Since the mechanical parts generate innumerably different excitation frequencies, and one or more of these will correspond to one or more of the resonant frequencies of the blade, this frequency will be propagated as aerodynamic noise.

The resonance can arise as natural oscillations of the blade shell in the blade structure, and as inherent waves, vibrations, in the air in one or more of the cavities in the blade.

In US patent no. 2,637,404 and US patent no. 2,732,020 there are descriptions of blades with aerofoil-like structure, laminated with an elastic material for use especially in connection with aeroplane propellers. The blades described consist of a solid or hollow core with one or more rubber layers over which a metal shell is deposited electrolytically. The rubber layer is laminated in order to avoid problems with micro-cracks in the surface, which serve as crack indications in the core. The rubber layer thus suppresses the high frequency vibrations which arise in the surface of the propeller blade, so that these do not give rise to damage to the core. The propeller blades described thus do not provide any solution to the suppression of structure noise at lower frequencies.

### Advantages of the invention

According to the invention, by incorporating one or more laminations of elastic material of rubber sheeting or the like for the separation of the layers, there is achieved a hitherto-unknown high degree of suppression of the natural oscillations in the blade which stem directly or indirectly from machine noise or vibrations, in that those of the blade elements which are separated by the rubber sheet will function as mutually suppressing elements. Moreover, the structure noise will be suppressed as a result of the elastic material's high loss factor in relation to the surroundings.

It has been shown that the effect of resonance, and herewith this part of the emission from the windmill, is hereby reduced.

In particular, there is achieved an effective suppression of the low-frequency noise.

Experiments have shown that, as a rule, the greatest suppression is achieved by incorporating laminations with layers which are as thin as is practically possible. Furthermore, the least possible reduction in the strength of ) the laminate is also achieved hereby.

As disclosed in claim 2, by also embedding a loose filling material in the cavity or the cavities in the blade, a suppression or elimination of the waves inherent in the cavity or cavities is achieved, and herewith the removal of the noise which these vibrations generate and radiate.

In addition to removing the inherent waves, the material will also contribute towards the suppression of the vibrations in the shell itself, and the affected elements such as ribs and cross braces.

There is thus achieved a speed/frequency-dependent suppression, in that the suppression characteristic in the 5 actual structure changes as a function of how much filling material lies up against the inner walls of the blade. This has the advantage that the suppression characteristic follows the windmill's speed of rotation, and herewith provides a kind of adaptive suppression.

Furthermore, the disadvantages which arise as a result of filling with structure foam and subsequent hardening are avoided, i.e. a tendency towards the absorption of condensation and moisture, which in the worst case can result in the deterioration of the glass fibre. Such a moisture content in the foam can also give rise to a dangerous imbalance of the blade.

Finally, the adherence of the foam to the glass fibre can more or less disintegrate, whereby the contact and herewith the direct suppression will cease.

As disclosed in claim 3, by completely filling out the cavity or the individual cavities, an effective suppression of the vibrations in the shell is ensured.

As disclosed in claim 4, by using an organic or inorganic granular material, the filling which is best suited for the individual blade can be selected with regard to dimension, density of the filling material etc.

As disclosed in claim 5, the use of balls of polystyrene or other foamed material ensures a filling with low weight and good suppression characteristics.

As disclosed in claim 6, the use of popcorn further ensures that the filling material is biologically decomposable.

As disclosed in claim 7, the use of sand or other mineral material ensures a stable and heavy filling material.

As disclosed in claim 8, the use of a mixture for the filling enables the mixture to be adjusted to specific needs regarding weight, degree of cementation, ability to move in the cavity etc.

Finally, as disclosed in claim 9, it is expedient to introduce different filling materials into the individual cavities in order to achieve a given weight distribution and structure in the blade.

### The drawing

In the following section, an example embodiment of the invention will be described in more detail with reference to the drawing, where
fig. 1 shows a cross-section of a windmill blade seen in the direction I-I in fig. 2, and
fig. 2 shows a longitudinal section of the windmill blade.

### Description of the example embodiment

In the drawing is shown an example embodiment of the windmill blade according to the invention.

The blade 1 comprises a shell 2 which extends from a hub flange 8 at the blade root for the securing of a hub 10 to a tip 9 at the end of the blade 1.

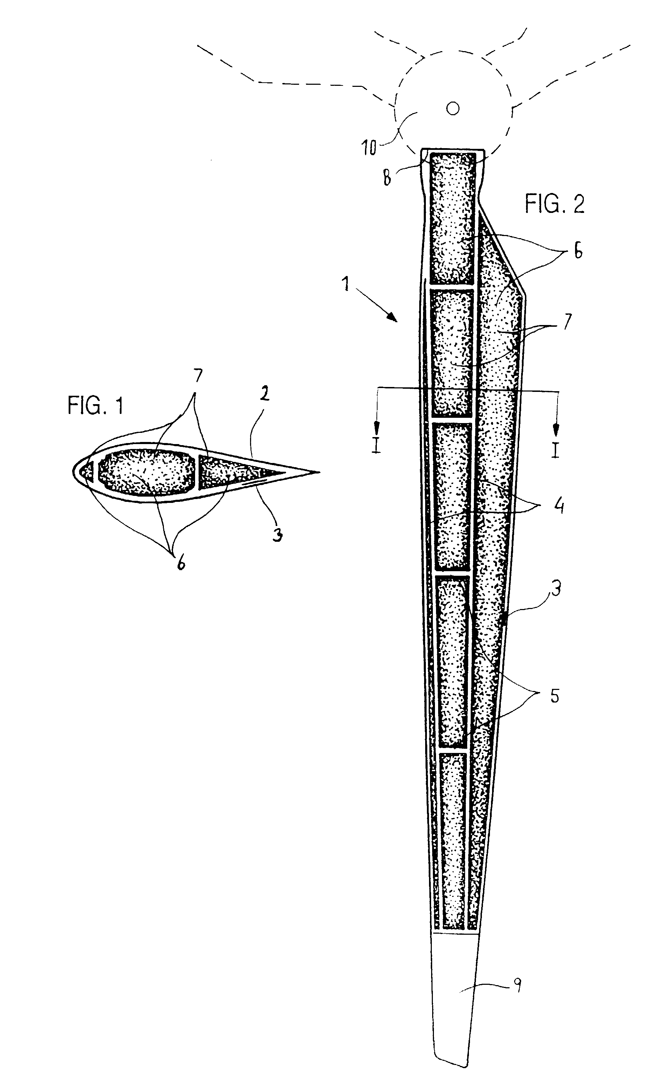

In the example shown, the shell 2 constitutes a closed tube with two longitudinal, internal ribs, said ribs being connected with cross braces 5 as shown in fig. 2.

There is thus formed a continuous cavity 6 front and rear, and a number of cavities 6 between the ribs 4 and the cross braces 5. In the example shown there are thus five separate cavities 6.

It is possible to produce the shell 2 without ribs and cross braces.

The shell 2 is produced by laying up a glass-fibre-laminated plastic with one or more laminations of rubber sheeting 3 for the formation of dividing layers between the layers of glass fibre. There is hereby achieved a construction in which the natural oscillations are suppressed, the reason being that the separated shell parts will serve as damping elements for one another.

In the cavities 6 there is also introduced a loose filling material 7 which can consist of polystyrene balls or similar granulate of foamed and hardened plastic.

Instead of polystyrene balls, the use of other materials can be envisaged, such as popcorn, which is biologically decomposable.

Moreover, other organic products such as corn and fruit can be used, also possibly mineral materials which are comminuted, such as sand.

The object of this filling material 7 is to fill out the cavities 6 as completely as possible, partly to eliminate the waves inherent in the airspace in the cavities, and partly to ensure good contact with the inside walls of the blade for direct suppression of the vibrations in the blade shell.

During operation, this contact will be ensured by the filling material being flung outwards in the cavities against the shell parts during the rotation of the blade.

This again will have the result that the suppression layer on the inside of the cavity becomes variable. The suppression in the structure itself will thus depend on how much centrifugal force is imposed on the filling material.

Since a loose filling material is used, this is subject to movement, whereby the absorption of moisture in the filling material will be difficult, in that this will not have any adjoining capillary tubes or passages.

The windmill blade is thus ensured against imbalance, and the glass fibre is not exposed to the influence of moisture.

In order to achieve a specific weight distribution in the blade, different filling materials can be used in the different cavities.

## Claims

1. Windmill blade made of glass-fibre-laminated synthetic material for the formation of an outer shell, and with possible internal, longitudinal ribs connected by cross braces, said ribs and braces extending in the cavity inside the blade shell, **characterized** in that one or more laminations of elastic material (3) of rubber sheeting or the like are incorporated for the separation of the layers of glass fibre.

2. Windmill blade according to claim 1, **characterized** in that a loose filling material (7) is also embedded in the cavity or cavities (6).

3. Windmill blade according to claim 2, **characterized** in that the filling material (7) fills out the cavity or the individual cavities (6).

4. Windmill blade according to claims 2 and 3, **characterized** in that the filling material (7) comprises a granulate or grain-shaped, organic or inorganic material.

5. Windmill blade according to claim 4, **characterized** in that the filling material (7) consists of polystyrene balls or balls of a similar foamed material.

6. Windmill blade according to claim 4, **characterized** in that the filling material (7) consists of popcorn.

7. Windmill blade according to claim 3, **characterized** in that the filling material (7) consists of sand or similar mineral grain material.

8. Windmill blade according to claims 5-7, **characterized** in that the filling material (7) consists of a mixture of polystyrene balls, popcorn and sand.

9. Windmill blade according to claims 5-8, **characterized** in that the filling material (7) in the individual cavities (6) can have different compositions and/or distribution.

## Patentansprüche

1. Windradflügel aus glasfaserlaminiertem Kunststof zur Bildung von einer äußeren Schale hergestellt und mit inneren in der Längsrichtung mit Querstangen verbundenen Rippen, welche Rippen und Querstangen in dem Hohlraum der Flügelschale verlaufen, dadurch gekennzeichnet daß eine oder mehrere Schichten von elastischem Material aus Gummituch oder dergleichen zur Trennung der Schichten auferlegt sind.

2. Windradflügel nach Anspruch 1, dadurch gekennzeichnet, daß zusätzlich ein loses Füllmaterial (7) in dem Hohlraum oder den Hohlräumen (6) eingelagert ist.

3. Windradflügel nach Anspruch 2, dadurch gekennzeichnet, daß das Füllmaterial (7) das Hohlraum oder die einzelnen Hohlräume ausfüllt.

4. Windradflügel nach Anspruch 2 und 3, dadurch gekennzeichnet, daß das Füllmaterial (7) ein Granulat oder einen körnigen, organischen oder unorganischen Stoff umfasst.

5. Windradflügel nach Anspruch 4, dadurch gekennzeichnet, daß das Füllmaterial (7) aus Polysterenkugeln oder Kugeln aus ähnlichem geschäumtem Stoff besteht.

6. Windradflügel nach Anspruch 4, dadurch gekennzeichnet, daß das Füllmaterial (7) aus Popcorn besteht.

7. Windradflügel nach Anspruch 3, dadurch gekennzeichnet, daß das Füllmaterial (7) aus Sand oder ähnlichem mineralischem Kornstoff besteht.

8. Windradflügel nach den Ansprüchen 5-7, dadurch gekennzeichnet, daß das Füllmaterial (7) aus einer Mischung von Polysterenkugeln, Popcorn und Sand besteht.

9. Windradflügel nach den Ansprüchen 5-8, dadurch gekennzeichnet, daß das Füllmaterial (7) in den einzelnen Hohlräumen (6) verschiedene Zusammensetzung und/oder Verteilung haben kann.

## Revendications

1. L'aile de moulin à vent fabriquée en matière synthétique laminée de fibre de verre pour la création d'une enveloppe extérieure et avec des nervures intérieures longitudinales reliées à des entretoises, lesdites nervures et entretoises s'étendant dans la cavité à l'intérieur de l'enveloppe de l'aile caractérisée en ce qu'un ou plusieurs laminages de matière élastique (3) de toile de caoutchouc ou similaire sont incorporés pour la séparation des couches.

2. L'aile de moulin à vent selon la revendication 1 caractérisée en ce qu'en outre, une matière de remplissage en vrac (7) est englobée dans la cavité ou les cavités (6).

3. L'aile de moulin à vent selon la revendication 2 caractérisée en ce que la matière de remplissage (7) remplit la cavité ou les cavités individuelles (6).

4. L'aile de moulin à vent selon la revendication 2 et 3 caractérisée en ce que la matière de remplissage (7) comprend un granulé ou une matière granuleuse, organique ou anorganique.

5. L'aile de moulin à vent selon la revendication 4 caractérisée en ce que la matière de remplissage (7) est composée de boules de polystyrène ou de boules d'une matière mousseuse similaire.

6. L'aile de moulin à vent selon la revendication 4 caractérisée en ce que la matière de remplissage (7) est composée de popcorn (maïs grillé).

7. L'aile de moulin à vent selon la revendication 3 caractérisée en ce que la matière de remplissage (7) est composée de sable ou de matières de grain minérales similaires.

8. L'aile de moulin à vent selon la revendication 5-7 caractérisée en ce que la matière de remplissage (7) est composée d'un mélange de boules de polystyrène, de popcorn et de sable.

9. L'aile de moulin à vent selon la revendication 5-8 caractérisée en ce que la matière de remplissage (7) dans les cavités individuelles (6) peut avoir une composition et/ou une répartition différentes.
